# EUROPÄISCHE PATENTANMELDUNG

(11) **EP 4 376 290 A1**
(43) Veröffentlichungstag der Anmeldung: **29.05.2024**
(21) Anmeldenummer: 23206472.5
(22) Anmeldetag: 27.10.2023
(51) Int. Cl.: H02P 29/024, A47J 31/00

(54) **VERFAHREN ZUR ANTRIEBSÜBERWACHUNG, HAUSHALTSGERÄT UND COMPUTERPROGRAMMPRODUKT**

(30) Priorität: 25.11.2022 DE 102022212640
(71) Anmelder: BSH Hausgeräte GmbH, 81739 München (DE)
(72) Erfinder: Schreiner, Thomas, 84419 Schwindegg (DE); Daubner, Peter, 83313 Siegsdorf (DE); Einsiedler, Thomas, 83278 Traunstein (DE)

(57) **Zusammenfassung**

Die Erfindung betrifft ein Verfahren zur Antriebsüberwachung bei einem Haushaltsgerät (1) mit einem elektrischen Antrieb (2), insbesondere bei einem Kaffeeautomaten mit einem elektromotorisch angetriebenen Mahlwerk, umfassend die Schritte:
a) ermitteln oder beziehen einer Vergleichsgröße eines Kennwerts für ein vordefiniertes Anzeichen eines bevorstehenden und noch nicht eingetretenen Ausfalls und/oder einer Blockade des elektrischen Antriebs (2), insbesondere mittels einer Antriebsstrom-Erfassungseinrichtung (3) oder aus einer Datenbank,
b) ermitteln des tatsächlich vorliegenden Betrags des Kennwerts,
c) abgleichen des tatsächlich vorliegenden Betrags mit der Vergleichsgröße, und
d) erzeugen einer Warnungsmeldung über den bevorstehenden Ausfall und/oder die bevorstehende Blockade des elektrischen Antriebs (2).

Die Erfindung betrifft auch ein Haushaltsgerät (1) mit einem elektrischen Antrieb (2) und einer entsprechend programmierten Steuervorrichtung (5) sowie ein dementsprechendes Computerprogrammprodukt.

## Beschreibung

Die Erfindung betrifft ein Verfahren zur Antriebsüberwachung bei einem Haushaltsgerät, ein dementsprechendes Haushaltsgerät und ein diesbezügliches Computerprogrammprodukt.

Es ist bekannt, dass bei Haushalts-Kaffeeautomaten ein Elektromotor als Antrieb einer Spindelbrühgruppe als angetriebene Komponente bis zum Erreichen einer definierten Verpresskraft als Zielwert betrieben wird, z.B. aus der EP 2 654 530 A1. Dabei wird das Erreichend der Verpresskraft ermittelt, indem der Motorstrom überwacht wird und aus dem Erreichen eines definierten Grenzwerts des Motorstroms das Erreichen der definierten Verpresskraft abgeleitet wird.

Es ist auch bekannt, dass bei Kaffeeautomaten ein Motorstrom eines Elektromotors als Antrieb eines Mahlwerks überwacht wird und aus einem Absinken des Motorstroms abgeleitet wird, dass vorher eingefüllte Kaffeebohnen vollständig vermahlen sind.

In beiden Fällen wird der Antrieb der Komponenten derart überwacht, dass das endgültige Eintreten eines Ereignisses aus dem Erreichen eines Grenzwertes des Motorstroms abgeleitet wird.

Da in nahezu jedem Haushaltsgerät eine Komponente durch einen meist elektrischen Antrieb angetrieben wird, führt ein Ausfall, d.h. ein Defekt dieses Antriebs, meist zu einem Ausfall des gesamten Haushaltsgeräts. Zwar kann im Fall eines Antriebs mittels eines Elektromotors dessen tatsächlich und endgültig eingetretener Ausfall durch die bekannte Stromüberwachung erkannt werden und durch deaktivieren des gesamten Gerätes oft weitere Schäden an anderen Bauteilen verhindert werden. Doch ist es für Bedienpersonen des Haushaltsgeräts nachteilig, dass es in der gesamten Zeit ab dem unvermittelten Eintreten des Ausfalls bis zum Abschluss einer Ersatzteilbeschaffung und Reparatur nicht verfügbar ist. Da es im Extremfall auch nötig sein kann, dass ein Ersatzgerät hergestellt und beschafft werden muss, ist dies neben dem Zeitaufwand und den Kosten auch im Hinblick auf die Nachhaltigkeit nachteilig.

Die Aufgabe der Erfindung ist es daher, die genannten Nachteile zu verbessern, insbesondere eine Ausfallzeit durch einen Defekt eines Antriebs bei einem Haushaltsgerät zu verbessern oder besonders bevorzug zu verhindern und so insbesondere Verbesserungen im Hinblick auf den Komfort und die Nachhaltigkeit zu ermöglichen.

Diese Aufgabe wird gelöst durch ein Verfahren nach Anspruch 1, durch ein Haushaltsgerät nach Anspruch 12 und durch ein Computerprogrammprodukt nach Anspruch 14. Vorteilhafte Weiterbildungen sind Gegenstand der abhängigen Ansprüche.

Das erfindungsgemäße Verfahren zur Antriebsüberwachung bei einem Haushaltsgerät mit einem elektrischen Antrieb, insbesondere bei einem Kaffeeautomaten mit einem elektromotorisch angetriebenen Mahlwerk, umfasst die Schritte:
a) ermitteln oder beziehen einer Vergleichsgröße eines Kennwerts für ein vordefiniertes Anzeichen eines bevorstehenden und noch nicht eingetretenen Ausfalls und/oder einer Blockade des elektrischen Antriebs, insbesondere mittels einer Antriebsstrom-Erfassungseinrichtung oder aus einer Datenbank,
b) ermitteln des tatsächlich vorliegenden Betrags des Kennwerts,
c) abgleichen des tatsächlich vorliegenden Betrags mit der Vergleichsgröße, und
d) erzeugengen einer Warnungsmeldung über den bevorstehenden Ausfall und/oder die bevorstehende Blockade des elektrischen Antriebs.

Das erfindungsgemäße Verfahren beruht auf dem allgemeinen Gedanken, nicht erst den tatsächlich eingetretenen Ausfall eines Antriebs mittels eines Elektromotors oder dessen vollständige d.h. endgültige Blockade durch die bekannte Stromüberwachung zu erkennen. Vielmehr soll anhand des genannten Abgleichs mit Vergleichsgrößen für bestimmte und vordefinierte Anzeichen eines bevorstehenden und noch nicht eingetretenen Ausfalls und/oder einer noch nicht vollständig eingetretenen Blockade des elektrischen Antriebs dies frühzeitig vorherbestimmt werden. Demgemäß kann hier bevorzugt zwischen einer Blockade und einer vollständigen d.h. endgültigen Blockade unterschieden werden, wobei eine endgültige Blockade nur durch einen Kundendiensteinsatz mit einer Reparatur oder einen vollständigen Antriebstausch behoben werden kann und hingegen eine Blockade auch auf anderen, insbesondere einfacheren und nachhaltigeren, Wegen.

Dadurch können z.B. Maßnahmen getroffen werden um den Ausfall zu verhindern oder hinauszuzögern. So kann auch nötigenfalls für Ersatz gesorgt werden, bevor der Ausfall, oder eine nicht mehr behebbare (z.B. nur durch einen Kundendiensteinsatz behebbare) vollständige Blockade, tatsächlich eintritt, ohne jedoch z.B. unnötigerweise aufs gerate Wohl einen Vorrat anzulegen. Dadurch können nicht nur Ressourcen geschont und eine besonders vorteilhafte Nachhaltigkeit erreicht werden, sondern auch ein Zeitaufwand und ggf. Kosten deutlich reduziert werden.

Das Beziehen der Vergleichsgröße aus einer Datenbank ermöglicht insbesondere das Festlegen der Vergleichsgröße anhand einer Vielzahl von Labormessungen. Das Ermitteln der Vergleichsgröße mittels der Antriebsstrom-Erfassungseinrichtung macht sich insbesondere die Erkenntnis zu Nutze, dass in einer sogenannten Einlaufphase am Anfang der Lebensdauer des Antriebs der Antriebsstrom höher ist als im eingelaufenen Zustand. Der Wert vom Anfang der Lebensdauer kann direkt, oder mit einem Korrekturfaktor verrechnet, die Vergleichsgröße ergeben. So kann der Wert spezifisch für genau diesen elektrischen Antrieb besonders präzise festgelegt werden. Dieser Wert kann ebenfalls in die Datenbank übertragen werden um deren Daten zu präzisieren, insbesondere, wenn viele Wert von weiteren baugleichen Haushaltsgeräten ebenfalls übertragen werden.

Das ermitteln des tatsächlich vorliegenden Betrags des Kennwerts kann mittels der Antriebsstrom-Erfassungseinrichtung erfolgen.

Bei einer vorteilhaften Weiterbildung des erfindungsgemäßen Verfahrens ist ein erster gleitender Mittelwert aus mehreren, insbesondere mindestens fünfzig, vorhergehenden Messwerten des erfassten Antriebsstroms gebildet, wobei ein Differenzbetrag zwischen einem Minimalwert und einem Maximalwert innerhalb dieser, insbesondere mindestens fünfzig, vorhergehenden Messwerten berechnet wird, und dass die Vergleichsgröße des Kennwerts ein Anstieg eines zweiten gleitenden Mittelwerts über mindestens drei, insbesondere fünf, direkt aufeinanderfolgende Messungen des erfassten Antriebsstroms auf einen Wert ist, der mindestens um den Differenzbetrag größer ist, als der Maximalwert, wobei insbesondere pro einem Einschaltzyklus des Antriebs ein Antriebsstromwert erfasst wird. Dadurch kann insbesondere ein bevorstehender und noch nicht eingetretener Ausfall zuverlässig erkannt und sozusagen vorhergesagt werden, bevor er tatschlich eintritt. Besonders vorteilhaft ist nach einer Einlaufphase des Motors - und vor dem Eintreten des vordefinierten Anzeichens des bevorstehenden und noch nicht eingetretenen Ausfalls und/oder der Blockade - der gleitende Mittelwert innerhalb einer normalen Streuung im Wesentlichen konstant. Das erfindungsgemäße Verfahren bzw. die Weiterbildung macht sich die Erkenntnis zu Nutze, dass der Ursprung eines Ausfalls sehr häufig auf die Unterbrechung einer Wicklung im Motor oder auf einen steigenden Übergangswiderstand zwischen Kohlebürste und Kommutator zurückzuführen ist. In beiden Fällen hat dies einen Anstieg des Motorstromes zur Folge, der jedoch noch nicht zu einem Ausfall führt. Steigt jedoch der Motorstrom an wird ein Durchbrennen weiterer Wicklungen bzw. eine weitere Erhöhung des Überganswiderstandes zwischen Kohlebürste und Kommutator begünstigt. Zusätzlich steigt die Motortemperatur an, was auch zu einer Beschleunigung des Ausfalles führt. Das Zusammenwirken dieser Effekte kann direkt, wenn überhaupt, nur mit einem sehr großen Aufwand erfasst werden. Jedoch macht sich das erfindungsgemäße Verfahren bzw. die Weiterbildung die Erkenntnis zu Nutze, dass diese Effekte einen deutlichen Anstieg des zweiten gleitenden Mittelwerts gegenüber dem ersten gleitenden Mittelwert bewirken. Um dies von einer üblichen, normalen Streuung des Motorstroms unterscheiden zu können, kann der erste gleitende Mittelwert aus mindestens fünfzig vorhergehenden Messwerten des erfassten Antriebsstroms gebildet werden, der Differenzbetrag zwischen einem Minimalwert und einem Maximalwert innerhalb dieser vorhergehenden Messwerten berechnet werden - und als vordefiniertes Anzeichen vorteilhaft ein Anstieg des zweiten gleitenden Mittelwerts auf einen Wert, der mindestens um den Differenzbetrag größer ist, als der Maximalwert, festgelegt werden. Dadurch wird sozusagen ein Anstieg auf einen Wert erkannt, der um (den Differenzbetrag, d.h.) den Wert der üblichen Streuung größer ist, als der übliche Maximalwert. Um unbedeutende Einzelfehler ausschließen zu können, ist der zweite gleitend Mittelwert über mindestens drei, insbesondere fünf, direkt aufeinanderfolgende Messungen gebildet, wobei drei eine besonders schnell arbeitende Überwachung und fünf eine besonders zuverlässig arbeitende Überwachung ermöglicht, wobei zwischen diesen Werten, z.B. bei vier, ein besonders guter Kompromiss zwischen beiden Aspekten ermöglicht wird.

Bei einer alternativen vorteilhaften Weiterbildung des erfindungsgemäßen Verfahrens ist ein erster gleitender Mittelwert aus mehreren, insbesondere mindestens fünfzig, vorhergehenden Messwerten des erfassten Antriebsstroms gebildet, wobei ein Differenzbetrag zwischen einem Minimalwert und einem Maximalwert innerhalb dieser, insbesondere mindestens fünfzig, vorhergehenden Messwerten berechnet wird, und wobei die Vergleichsgröße des Kennwerts ein Anstieg des gemessenen Antriebsstroms um einen Wert größer oder gleich dem Differenzbetrag innerhalb einer Zweitspanne kleiner 500 ms, insbesondere kleiner 300 ms, besonders bevorzug innerhalb von 200ms, ist. Das erfindungsgemäße Verfahren bzw. die Weiterbildung macht sich hier die Erkenntnis zu Nutze, dass bei einer eintretenden Blockade ein besonders schneller Anstieg erfolgt, jedoch bei ausreichend schneller Überwachung und dem genannten Verfahren die bevorstehende Blockade erfasst werden kann, noch bevor eine vollständige Blockade eingetreten ist. Eine vollständig eingetretene Blockade kann üblicherweise nur durch einen Kundendiensteinsatz mit einer Reparatur oder einem vollständigen Antriebstausch behoben werden. Eine eintretende, jedoch noch nicht vollständig eingetretene Blockade kann hingegen bei rechtzeitigem Anhalten des Antriebs ggf. Geräteseitig oder durch eine Bedienperson sehr einfach behoben werden. So kann ein vollständiges Eintreten der Blockade in vorteilhafter Weise abgewandt werden. Eine Zeitspanne kleiner 500ms kann mit gängigen Erfassungsmitteln einfach realisiert werden und ermöglicht dennoch eine ausreichend genaue Antriebsüberwachung, z.B. bei einem Mahlwerk eines Kaffeeautomaten eine Erkennung einer bevorstehenden Blockade durch ein mitgemahlenes Holzstück, das erst noch zerkleinert wird und dann die Mahlscheiben zusetzt. Eine Zeitspanne kleiner 200ms ermöglicht bei größeren Anforderungen an die Schnelligkeit der Erfassung auch ein Erfassen besonders plötzlich eintretender Blockaden, z.B. beim genannten Kaffeeautomaten durch ein in das Mahlwerk geratenes Geldstück oder eine Schraube. Eine Zeitspanne kleiner 300 ms ermöglicht einen besonders guten Kompromiss zwischen den beiden genannten Aspekten.

Bei einer weiteren vorteilhaften Weiterbildung des erfindungsgemäßen Verfahrens wird die Warnungsmeldung über die bevorstehende Blockade des elektrischen Antriebs erzeugt und der elektrische Antrieb schnellstmöglich angehalten, und anschließend um einem vordefinierten Wert in einer Drehrichtung angetrieben, die einer Hauptantriebsrichtung entgegengesetzt ist. Dadurch kann einerseits das Eintreten einer vollständigen Blockade rechtzeitig abgewandt werden und andererseits die Ursache abwendbar gemacht oder zumindest abgemildert werden. So kann z.B. bei einem Mahlwerk eines Kaffeeautomaten eine bevorstehende Blockade durch ein in das Mahlwerk geratenes Geldstück verhindert und das Geldstück soweit zurückbefördert oder wieder freigegeben werden, dass es eine Bedienperson entnehmen kann. Es kann auch z.B. bei einem mitgemahlenen Holzstück das bereits genannte Zusetzen der Mahlscheibe verhindert werden und z.B. durch weiteres, insbesondere mehrmaliges, Umkehren der Drehrichtung das Holzstück ohne Zusetzen der Mahlscheiben automatisch aus dem Mahlwerk ausgetragen werden.

Bei einer weiteren vorteilhaften Weiterbildung des erfindungsgemäßen Verfahrens enthält abhängig von dem Betrag der tatsächlich eingetretenen Zeitspanne des Anstiegs die erzeugte Warnungsmeldung eine Detailmeldung zu mindestens einer von verschiedenen vordefinierten Ursachen für die bevorstehende Blockade. Beispielsweise kann bei einem Mahlwerk eines Kaffeeautomaten eine Detailmeldung bei der Zeitspanne, die einem in das Mahlwerk geratenes Geldstück entspricht die Meldung enthalten, das Geldstück, bzw. einen erfassten Fremdkörper, über ein Eingreifen in einen Bohnenbehälter aus dem Mahlwerk zu entfernen. Hingegen kann eine Detailmeldung bei der Zeitspanne, die einem in das Mahlwerk geratenes Holzstück die Meldung enthalten, dass ein Vorgang zum automatischen Austragen des Holzstücks, bzw. des erfassten Fremdkörpers, durchgeführt wird und erst anschließend wieder ein Kaffeebezug möglich ist.

Bei einer weiteren vorteilhaften Weiterbildung des erfindungsgemäßen Verfahrens enthält die Warnungsmeldung eine Detailmeldung zu mindestens einer zu erwartenden Zeitspanne und/oder Zyklenanzahl bis zu dem bevorstehenden Ausfall. Hierbei macht sich die Weitebildung des erfindungsgemäßen Verfahrens die Erkenntnis zu Nutze, dass der genaue Verlauf des Anstiegs des Motorstromes auch Rückschlüsse auf Art der Ursache des bevorstehenden Ausfalls und dessen Fortschreiten zulässt. Mit dieser Erkenntnis lassen sich für verschiedene Arten von Antrieben für verschiedene Ursachen und Fortschritte je charakteristische Verläufe auswerten, Vergleichsverläufe definieren und abgleichen, z.B. ob im bereits erwähnten Beispiel bisher lediglich eine einzige Unterbrechung einer Wicklung im Motor vorliegt, oder durch die daraus resultierte Temperaturerhöhung der Motorstrom bereits so angestiegen ist, dass weitere Wicklungen durchgebrannt sind. Daraus kann eine zu erwartende Zeitspanne und/oder Zyklenanzahl bis zu dem bevorstehenden Ausfall ermittelt werden und mittels der Warnungsmeldung eine Bedienperson vorgewarnt werden und ggf. in die Lage versetzt werden, rechtzeitig für einen Ersatz oder eine Reparaturmaßnahme zu sorgen.

Bei einer weiteren vorteilhaften Weiterbildung des erfindungsgemäßen Verfahrens enthält die Warnungsmeldung eine Detailmeldung zu mindestens einer Einstellungs- und/oder Benutzungsverhaltensänderung. Dadurch kann z.B. eine kritische Belastung, die den Verlauf des Anstiegs des Motorstromes weiter beschleunigen würde, verringert oder verhindert werden. Beispielsweise könnte bei einem Antrieb einer Waschmaschine ein bevorstehender Ausfall durch häufiges Überladen einer Waschtrommel hervorgerufen oder beschleunigt worden sein. Eine Reduzierung der Beladung für folgende Waschgänge als Benutzungsverhaltensänderung könnte dann ausreichen um den Ausfall hinauszuzögern, oder sogar vollständig abzuwenden. Beispielsweise könnte auch die Anwendung von speziellen Schonprogrammen als Einstellungsänderung dazu führen eine kritische Belastung zu reduzieren und das Eintreten des tatsächlichen Ausfalls hinauszuzögern oder sogar abzuwenden.

Bei einer weiteren vorteilhaften Weiterbildung des erfindungsgemäßen Verfahrens enthält die Detailmeldung eine mögliche Änderung der zu erwartenden Zeitspanne und/oder Zyklenanzahl bis zu dem bevorstehenden Ausfall bei einem vollständigen Umsetzen der Einstellungs- und/oder Benutzungsverhaltensänderung. Dadurch kann ein Anreiz geschaffen werden, die Einstellungs- und/oder Benutzungsverhaltensänderung auch tatsächlich einzuhalten. Üblicherweise - und in gleichem Maße nachvollziehbar - ändern Bedienpersonen ihr Benutzungsverhalten eher ungern und wählen bestimmte Einstellungen genau deswegen, weil sie diese eben bevorzugen. Vermutlich hat z.B. jeder selbst schon mal eine Waschmaschine überladen. Mit der Detailmeldung einer möglichen Verzögerung des bevorstehenden Ausfalls, oder gar der Möglichkeit diesen Ausfall durch eine Änderung vollständig Abzuwenden, kann jedoch ggf. ein ausreichender Ansporn zu einer solchen Änderung geschaffen werden. Dadurch kann z.B. auch die Nachhaltigkeit erheblich verbessert werden.

Bei einer weiteren vorteilhaften Weiterbildung des erfindungsgemäßen Verfahrens wird der Warnungsmeldung eine Schaltfläche zugeordnet, über die ein Hilfestellungshinweis abgerufen, ein Kundendienst hinzugezogen und/oder eine Ersatzbestellung ausgelöst werden kann. Einerseits kann dadurch bei einem nicht mehr abwendbaren bevorstehenden Ausfall besonders schnell und einfach eine Lösung arrangiert werden. Andererseits kann ein Hilfestellungshinweis, der z.B. eine Einstellungs- und/oder Benutzungsverhaltensänderung vermittelt, besonders komfortabel angeboten werden und so die Überwindung zu einer Änderung positiv beeinflusst werden.

Bei einer weiteren vorteilhaften Weiterbildung des erfindungsgemäßen Verfahrens wird die Warnungsmeldung an einer Anzeigevorrichtung des Haushaltsgeräts und/oder an einer dem Haushaltsgerät zugeordneten mobilen Anzeigevorrichtung zur Anzeige gebracht. Die Anzeige an der Anzeigevorrichtung des Haushaltsgeräts ermöglicht einen besonders direkten Hinweis am Gerät und die Anzeige an der mobilen Anzeigevorrichtung einen besonders komfortablen Abruf, was wiederrum die Überwindung zu einer Änderung positiv beeinflussen kann.

Bei einer weiteren vorteilhaften Weiterbildung des erfindungsgemäßen Verfahrens erfolgt das Festlegen der Vergleichsgröße und/oder das abgleichen des tatsächlich vorliegenden Betrags mit der Vergleichsgröße mittels einer mit künstlichen Intelligenz arbeitenden Einheit. Als Trainingsdaten werden der Künstlichen Intelligenz, kurz KI, Datensätze eingegeben, die den tatsächlich vorliegenden Betrag des Kennwerts über die Lebensdauer, oder zumindest aussagekräftige Auszüge daraus, von realen elektrischen Antrieben enthalten, inklusive dem Auftreten mindestens eines vordefinierten Anzeichens eines bevorstehenden und noch nicht eingetretenen Ausfalls und/oder einer noch nicht eingetretenen vollständigen Blockade des elektrischen Antriebs, und Werte aus der Spanne bis zum und beim vollständigen eintreten des tatsächlich eingetretenen Ausfalls und/oder der tatsächlich vorliegenden vollständigen Blockade. Insbesondere sind dabei auch Datensätze enthalten, die Beispiele für übliche Abweichungen, die jedoch noch kein Anzeichen für einen bevorstehenden Ausfall oder eine Blockade sind. Bevorzugt werden auch Datensätze mit jeweils zugeordneten typischen, jedoch verschiedenen vordefinierten Anzeichen bereitgestellt. Dadurch kann eine unregelmäßige Abweichung als vordefiniertes Anzeichen nicht nur besonders sicher, sondern auch besonders schnell erkannt und sozusagen vorhergesagt werden.

Die eingangs genannte Aufgabe wird auch gelöst durch ein Haushaltsgerät mit einem elektrischen Antrieb, insbesondere einen Kaffeeautomaten mit einem elektromotorisch angetriebenen Mahlwerk, das sich dadurch auszeichnet, dass eine Steuervorrichtung Haushaltsgeräts eingerichtet und programmiert ist, das vorhergehend beschriebene Verfahren durchzuführen. Dadurch kann beispielsweise eine Bedienperson dessen praktischen Nutzen am eigenen Haushaltsgerät, insbesondere am eigenen Kaffeeautomaten, erfahren.

Bei einer vorteilhaften Weiterbildung ist das erfindungsgemäße Haushaltsgerät mit einer Übertragungseinrichtung zur digitalen Datenübertragung ausgestattet, und zeichnet sich dadurch aus, dass das Beziehen, oder ein Aktualisieren, der Vergleichsgröße des Kennwerts mittels der Übertragungseinrichtung, insbesondere über eine Internetverbindung, erfolgt. Zusätzlich oder alternativ kann die mittels der Antriebsstrom-Erfassungseinrichtung erfasste Vergleichsgröße des Kennwerts mittels der Übertragungseinrichtung zur digitalen Datenübertragung, insbesondere über eine Internetverbindung, in die Datenbank übertragen werden. Dadurch wird ein für eine Erfassung benötigter Aufwand verringert oder vermieden und andererseits eine herstellerseitige Anpassung der Vergleichsgröße, z.B. an zwischenzeitlich gewonnene oder präzisierte Erkenntnisse, z.B. mittels einer sehr leistungsstarken KI in einem Zentralrechner, erfolgen. Insbesondere können mittels der Datenbank viele von mehreren spezifischen Haushaltsgeräten übermittelte spezifische Vergleichsgrößen ausgewertet und so eine noch präzisere Vergleichsgröße für eine Aktualisierung in diesen spezifischen Haushaltsgeräten und/oder anderen spezifischen Haushaltsgeräten, bereitgestellt werden.

Die eingangs genannte Aufgabe wird auch gelöst durch ein Computerprogrammprodukt, umfassend Befehle, die bei der Ausführung des Programms durch eine Steuervorrichtung eines Haushaltsgeräts, insbesondere die eines Kaffeeautomaten, die Steuervorrichtung veranlassen, die Schritte des vorhergehend beschriebenen Verfahrens durchzuführen. Dadurch können z.B. bereits produzierte oder sogar bereits verkaufte Haushaltsgeräte in die Lage versetzt werden, von den genannten Vorteilen des erfindungsgemäßen Verfahrens bzw. der Weiterbildungen zu profitieren. Dies wirkt sich besonders vorteilhaft auf die Nachhaltigkeit aus.

Im Folgenden wird das Prinzip der Erfindung anhand einer Zeichnung beispielhaft noch näher erläutert. In der Zeichnung zeigen:
- Fig. 1:: eine schematische Darstellung eines Kaffeeautomaten als Haushaltsgerät 1 mit einem elektromotorisch angetriebenen Mahlwerk als elektrischen Antrieb 2 in der Seitenansicht im Teilschnitt, und
- Fig. 2:: eine schematische Darstellung eines Verlaufs des ermittelten tatsächlich vorliegenden Betrags des Kennwerts des Motorstroms des Mahlwerks aus Fig. 1 über dessen Lebensdauer bis zum tatsächlich eingetretenen Ausfall.

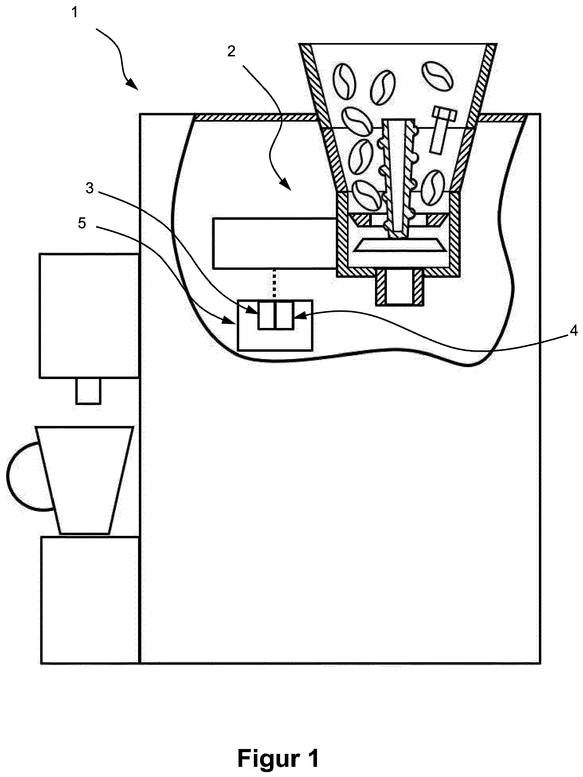

In Figur 1 ist ein Kaffeeautomat 1 als Beispiel eines Haushaltsgeräts (1) mit einem elektromotorisch angetriebenen Mahlwerk 2 als Beispiel eines elektrischen Antriebs (2) erkennbar, der das im Folgenden näher beschriebene Verfahren zur Antriebsüberwachung durchführt.

Der Kaffeeautomat 1 führt im Betrieb das Verfahren zur Antriebsüberwachung am elektromotorisch angetriebenen Mahlwerk 2 aus und bezieht zunächst eine Vergleichsgröße eines Kennwerts für ein vordefiniertes Anzeichen eines bevorstehenden und noch nicht eingetretenen Ausfalls und/oder einer Blockade des Mahlwerks 2 aus einer Datenbank. Anschließend erfolgt ein Ermitteln des tatsächlich vorliegenden Betrags des Kennwerts mittels einer Antriebsstrom-Erfassungseinrichtung 3. Der tatsächlich vorliegende Betrag wird nun mit der Vergleichsgröße abgeglichen. Sobald der tatsächlich vorliegende Betrag der Vergleichsgröße entspricht wird eine Warnungsmeldung über den bevorstehenden Ausfall und/oder die bevorstehende Blockade des elektrischen Antriebs 2 erzeugt.

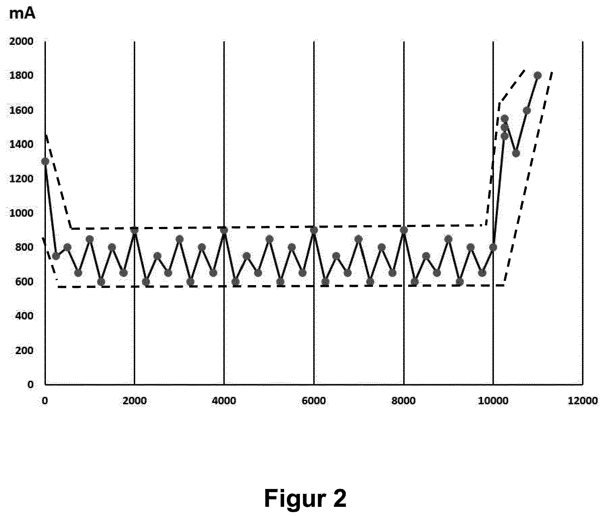

Ein bevorstehender und noch nicht eingetretener Ausfall des Antriebs des Mahlwerks 2 kann zuverlässig durch einen Abgleich erkannt und sozusagen vorhergesagt werden, bei dem ein erster gleitender Mittelwert aus mindestens fünfzig vorhergehenden Messwerten des erfassten Antriebsstroms des Mahlwerks 2 gebildet ist, wobei ein Differenzbetrag zwischen einem Minimalwert und einem Maximalwert innerhalb dieser fünfzig vorhergehenden Messwerten berechnet wird, der abgeglichen wird mit einem Anstieg eines zweiten gleitenden Mittelwerts über mindestens drei direkt aufeinanderfolgende Messungen des erfassten Antriebsstrom auf einen Wert, der mindestens um den Differenzbetrag größer ist, als der Maximalwert. Zur Veranschaulichung dessen zeigt Figur 2 eine schematische Darstellung eines Verlaufs des ermittelten tatsächlich vorliegenden Betrags des Kennwerts des Motorstroms eines spezifischen Mahlwerks 2 über dessen Lebensdauer bis zum tatsächlich eingetretenen Ausfall. Dabei ist erkennbar, dass der erste gleitende Mittelwert über fünfzig vorhergehende Messwerte in einem Großteil der Lebensdauer bei 750 Milliampere (mA) liegt, zwischen Minimalwerten von 600 mA und Maximalwerten von 900 mA. Daher ergibt sich der Differenzbetrag von 300 mA. Kurz vor dem Ende der Lebensdauer dieses Mahlwerks 2 steigt der erfasste Antriebsstrom durch ein Durchbrennen einer einzelnen Wicklung deutlich an, nämlich über mindestens drei direkt aufeinanderfolgende Messungen auf einen Wert über 1400 mA. Damit steigt der zweite gleitende Mittelwert auf einen Wert, der mindestens um den Differenzbetrag größer ist, als der Maximalwert, was hier bereits durch einen Anstieg auf mehr als 1200 mA erfüllt wäre.

Wie in Fig. 2 erkennbar ist der Wert im vorliegenden Beispiel sogar um 500 mA größer als der Maximalwert von 900 mA. Sobald dies eintritt wird die Warnungsmeldung über den bevorstehenden Ausfall des Mahlwerks 2 erzeugt. Dafür ist es ausreichend wenn die Antriebsstrom-Erfassungseinrichtung 3 jeweils einen vergleichbaren Messwert je erfolgtem Mahlvorgang liefert. Da es sich ggf. um mehrere tausend Zyklen handelt, ist die Darstellung der Fig. 2 dahingehend schematisiert, dass durch gestrichelte Linien ein Bereich gezeigt ist, in dem sich die alle Messwerte befinden, jedoch nur vier Werte je tausend Zyklen spezifisch durch Punkte dargestellt sind. Die hier dargestellte Lebensdauer ist rein Beispielhaft und liegt üblicherweise deutlich über den dargestellten Werten. Auch haben viele Einflussfaktoren ihre Auswirkungen auf den Mittelwert und den Differenzbetrag, wie z.B. unterschiedlich stark geröstete Bohnen, wobei sich bei einem Wechsel der Bohnensorten diese üblicherweise zu einem gewissen Grad mischen. Zudem ist auf der linken Seite der Figur 2 zu erkennen, dass der Antriebsstrom am Anfang der Lebensdauer in einer sogenannten Einlaufphase höher ist, als im anschließenden eingelaufenen Zustand. So können für verschiedenste vorhersehbare Nutzungs-Szenarien Vergleichsdaten erhoben und in der Datenbank hinterlegt werden. Diese Vergleichsdaten können einer KI als Trainingsdaten zu Verfügung gestellt werden. Das Abgleichen des tatsächlich vorliegenden Betrags mit der Vergleichsgröße kann daher noch zuverlässiger mittels einer mit dieser künstlichen Intelligenz arbeitenden Einheit erfolgen, die noch präziser beispielsweise ein Zusammentreffen eines Leermahlens und einer anschließenden Neubefüllung mit viel härter gerösteten Bohnen und gleichzeitiger Mahlgradverstellung unterschieden werden von einem durch einen Bürstenschaden steigenden Übergangswiderstand zwischen Kohlebürste und Kommutator.

Die nicht dargestellte Warnungsmeldung enthält eine Detailmeldung dazu, dass ein Ausfall bevorsteht und innerhalb von 250 Zyklen, hier Mahlvorgängen d.h. 250 normalen Kaffeegetränken, mit dem Ausfall des Mahlwerks zu rechnen ist. Sie wird an einer Anzeigevorrichtung des Haushaltsgeräts 1 und an einer dem Haushaltsgerät 1 zugeordneten mobilen Anzeigevorrichtung angezeigt. Die Warnungsmeldung enthält auch eine Detailmeldung zu einer empfohlenen Mahlgrad-Einstellungsänderung auf den gröbsten möglichen Mahlgrad und einer um je eine Stufe reduzierten Kaffeestärken-Einstellung sowie einer dadurch möglichen Änderung der zu erwartenden Zyklenanzahl - bei vollständigem Umsetzen der Empfehlung - von 250 verbleibenden Kaffeegetränken auf 500 Kaffeegetränke bis zum zu erwartenden Ausfall des Mahlwerks 2. Der Warnungsmeldung ist eine Schaltfläche zugeordnet, über die ein Hilfestellungshinweis zur Verstellung des Mahlgrads abgerufen, ein Kundendienst hinzugezogen und eine Ersatzbestellung ausgelöst werden kann. So kann nicht nur der tatsächliche Ausfall hinausgezögert werden, sondern auch eine Ausfallzeit des Kaffeeautomaten 1 beim tatsächlichen Eintreten des Ausfalls des Mahlwerks 2 verringert werden.

Bei einer kontinuierlichen Erfassung des Antriebsstroms durch die Antriebsstrom-Erfassungseinrichtung 3 kann auch eine bevorstehende, jedoch noch nicht vollständig eingetretene Blockade des Mahlwerks 2 erkannt werden. Als kontinuierlich kann hier beispielsweise angesehen werden, wenn eine Messung alle 50 Millisekunden (ms) erfolgt. Die bevorstehende Blockade des Mahlwerks 2 wird durch einen Abgleich erkannt, bei dem ein erster gleitender Mittelwert aus mindestens fünfzig vorhergehenden Messwerten des erfassten Antriebsstroms gebildet ist (im Beispiel nach Fig. 2 z.B. 750 mA), wobei ein Differenzbetrag zwischen einem Minimalwert (z.B. 600 mA) und einem Maximalwert (z.B. 900 mA) innerhalb dieser fünfzig vorhergehenden Messwerten berechnet wird (z.B. ein Differenzbetrag von 300 mA), und wobei die Vergleichsgröße des Kennwerts ein Anstieg des gemessenen Antriebsstroms um einen Wert größer oder gleich dem Differenzbetrag (größer/gleich 300 mA) innerhalb einer Zweitspanne kleiner 200 ms ist. Sobald dies in der genannten Zeitspanne eintritt wird die Warnungsmeldung über die bevorstehende Blockade des Mahlwerks 2 erzeugt und der elektrische Antrieb des Mahlwerks 2 schnellstmöglich angehalten. Vorteilhaft wird er anschließend um einem vordefinierten Wert, hier um eine Umdrehung, in einer Drehrichtung angetrieben, die einer Hauptantriebsrichtung entgegengesetzt ist. Es wird sozusagen um eine Umdrehung zurückgedreht. Abhängig vom Betrag der tatsächlich eingetretenen Zeitspanne des Anstiegs, hier 200 ms, enthält die erzeugte Warnungsmeldung eine Detailmeldung zur Ursachen für die bevorstehende Blockade, die als in das Mahlwerk 2 geratene Schraube identifiziert wird. Durch die Detailmeldung kann eine Bedienperson des Kaffeeautomaten 1 erstens erkennen, warum der gerade gestartete Getränkebezug plötzlich angehalten wird, jedoch zweitens auch, dass die Ursache die in das Mahlwerk 2 geratene Schraube ist. Diese kann beispielsweise unbemerkt von einem Scharnier eines über dem Kaffeeautomaten 1 befestigten Wandschranks abgefallen und über den Bohnenbehälter in das Mahlwerk 2 gelangt sein, oder in einem Herstellungsprozess der Kaffeebohnen in die Verpackung gelangt sein. Häufiger ist dies erfahrungsgemäß bei kleinen Holzstücken oder auch bei Geldstücken der Fall, die aber schwerer darzustellen sind, weshalb in Fig. 1 eine Schraube erkennbar ist. Eine durch die Schraube vollständig eingetretene Blockade könnte, selbst wenn die Schraube durch ein automatisches zurückdrehen wieder gelöst werden könnte, wiederrum ein Durchbrennen einer Wicklung und somit dennoch einen Ausfall hervorrufen. Dies kann durch das vorhergehend beschriebene Verfahren verhindert werden.

Der Detailmeldung ist im genannten Beispiel auch eine Schaltfläche zugeordnet, über die ein Hilfestellungshinweis zur Entfernung der Schraube aus dem Mahlwerk 2 abgerufen werden kann. Durch das um eine Umdrehung zurückgedrehte Mahlwerk 2 ist die Schraube nicht zwischen den Mahlscheiben eingeklemmt und kann über den Bohnenbehälter nach oben entnommen werden. Das ist ohne spezielles Werkzeug und Vorwissen möglich, jedoch ohne die Schritt-für-Schritt Anleitung aus dem Hilfestellungshinweis schwierig und erst durch den Hilfestellungshinweis für alle Bedienpersonen einfach zu bewerkstelligen.

Um die Erkennung des bevorstehenden und noch nicht eingetretenen Ausfalls und/oder der Blockade des Mahlwerks 2 zu ermöglichen ist eine Steuervorrichtung 5 des Haushaltsgeräts 1 eingerichtet und programmiert, die beiden beschriebenen Ausführungen des genannten Verfahren zur Antriebsüberwachung durchzuführen. Hierzu ist Computerprogrammprodukt vorgesehen, umfassend Befehle, die bei der Ausführung des Programms durch die Steuervorrichtung 5 des Kaffeeautomaten 1, die Steuervorrichtung 5 veranlassen, die Schritte des genannten Verfahrens zur Antriebsüberwachung durchzuführen. Wie in Figur 1 erkennbar ist, umfasst die Steuervorrichtung 5 im vorliegenden Beispiel auch die Antriebsstrom-Erfassungseinrichtung 3 und die Übertragungseinrichtung 4 zur digitalen Datenübertragung.

Eine besonders hohe Nachhaltigkeit wird dadurch erreicht, dass das genannte Computerprogrammprodukt über die Übertragungseinrichtung 4 zur digitalen Datenübertragung auch nachträglich auf bereits verkaufte Kaffeeautomaten 1 übertragen werden kann. Sofern diese über ein elektromotorisch angetriebenes Mahlwerk 2, eine Antriebsstrom-Erfassungseinrichtung 3 und eine Steuervorrichtung 5 verfügen, was üblicherweise der Fall ist, können diese auch lange nach ihrer Herstellung und dem Verkauf noch in die Lage versetzt werden, von den Vorteilen des erfindungsgemäßen Verfahrens zu profitieren.

Insgesamt können somit nicht nur die eingangs genannten Nachteile verbessert werden, sondern insbesondere eine Ausfallzeit durch einen Defekt eines Antriebs bei dem Kaffeeautomaten 1 komfortabel verringert werden, und dies besonders Nachhaltig auch bei bereits produzierten und verkauften Kaffeeautomaten 1 ermöglicht werden.

### BEZUGSZEICHENLISTE

- 1: Kaffeeautomat
- 2: elektromotorisch angetriebenes Mahlwerk
- 3: Antriebsstrom-Erfassungseinrichtung
- 4: Übertragungseinrichtung zur digitalen Datenübertragung
- 5: Steuervorrichtung

## Patentansprüche

1. Verfahren zur Antriebsüberwachung bei einem Haushaltsgerät (1) mit einem elektrischen Antrieb (2), insbesondere bei einem Kaffeeautomaten mit einem elektromotorisch angetriebenen Mahlwerk, umfassend die Schritte:
a) ermitteln oder beziehen einer Vergleichsgröße eines Kennwerts für ein vordefiniertes Anzeichen eines bevorstehenden und noch nicht eingetretenen Ausfalls und/oder einer Blockade des elektrischen Antriebs (2), insbesondere mittels einer Antriebsstrom-Erfassungseinrichtung (3) oder aus einer Datenbank,
b) ermitteln des tatsächlich vorliegenden Betrags des Kennwerts,
c) abgleichen des tatsächlich vorliegenden Betrags mit der Vergleichsgröße, und
d) erzeugen einer Warnungsmeldung über den bevorstehenden Ausfall und/oder die bevorstehende Blockade des elektrischen Antriebs (2).

2. Verfahren nach Anspruch 1, **dadurch gekennzeichnet, dass** ein erster gleitender Mittelwert aus mehreren, insbesondere mindestens fünfzig, vorhergehenden Messwerten des erfassten Antriebsstroms gebildet ist, wobei ein Differenzbetrag zwischen einem Minimalwert und einem Maximalwert innerhalb dieser, insbesondere fünfzig, vorhergehenden Messwerten berechnet wird, und dass die Vergleichsgröße des Kennwerts des bevorstehenden Ausfalls ein Anstieg eines zweiten gleitenden Mittelwerts über mindestens drei, insbesondere fünf, direkt aufeinanderfolgende Messungen des erfassten Antriebsstroms auf einen Wert ist, der mindestens um den Differenzbetrag größer ist, als der Maximalwert, wobei insbesondere pro einem Einschaltzyklus des Antriebs (2) ein Antriebsstromwert erfasst wird.

3. Verfahren nach Anspruch 1, **dadurch gekennzeichnet, dass** ein erster gleitender Mittelwert aus mehreren, insbesondere mindestens fünfzig, vorhergehenden Messwerten des erfassten Antriebsstroms gebildet ist, wobei ein Differenzbetrag zwischen einem Minimalwert und einem Maximalwert innerhalb dieser, insbesondere fünfzig, vorhergehenden Messwerten berechnet wird, und dass die Vergleichsgröße des Kennwerts der bevorstehenden Blockade ein Anstieg des gemessenen Antriebsstroms um einen Wert größer oder gleich dem Differenzbetrag innerhalb einer Zweitspanne kleiner 500 ms, insbesondere kleiner 300 ms, besonders bevorzug innerhalb von 200ms, ist.

4. Verfahren nach Anspruch 3, **dadurch gekennzeichnet, dass** die Warnungsmeldung über die bevorstehende Blockade des elektrischen Antriebs (2) erzeugt wird, der elektrische Antrieb (2) schnellstmöglich angehalten wird und anschließend um einem vordefinierten Wert in einer Drehrichtung angetrieben wird, die einer Hauptantriebsrichtung entgegengesetzt ist.

5. Verfahren nach Anspruch 3 oder 4, **dadurch gekennzeichnet, dass** abhängig vom Betrag der tatsächlich eingetretenen Zeitspanne des Anstiegs die erzeugte Warnungsmeldung eine Detailmeldung zu mindestens einer von verschiedenen vordefinierten Ursachen für die bevorstehende Blockade enthält.

6. Verfahren nach einem der Ansprüche 1 bis 5, **dadurch gekennzeichnet, dass** die Warnungsmeldung eine Detailmeldung zu mindestens einer zu erwartenden Zeitspanne und/oder Zyklenanzahl bis zu dem bevorstehenden Ausfall enthält.

7. Verfahren nach einem der Ansprüche 1 bis 6, **dadurch gekennzeichnet, dass** die Warnungsmeldung eine Detailmeldung zu mindestens einer Einstellungs- und/oder Benutzungsverhaltensänderung enthält.

8. Verfahren nach Anspruch 7, **dadurch gekennzeichnet, dass** die Detailmeldung eine mögliche Änderung der zu erwartenden Zeitspanne und/oder Zyklenanzahl bis zu dem bevorstehenden Ausfall bei einem vollständigen Umsetzen der Einstellungs- und/oder Benutzungsverhaltensänderung enthält.

9. Verfahren nach einem der Ansprüche 1 bis 8, **dadurch gekennzeichnet, dass** der Warnungsmeldung eine Schaltfläche zugeordnet ist, über die ein Hilfestellungshinweis abgerufen, ein Kundendienst hinzugezogen und/oder eine Ersatzbestellung ausgelöst werden kann.

10. Verfahren nach einem der Ansprüche 1 bis 9, **dadurch gekennzeichnet, dass** die Warnungsmeldung an einer Anzeigevorrichtung des Haushaltsgeräts (1) und/oder an einer dem Haushaltsgerät (1) zugeordneten mobilen Anzeigevorrichtung zur Anzeige gebracht wird.

11. Verfahren nach einem der Ansprüche 1 bis 10, **dadurch gekennzeichnet, dass** das Festlegen der Vergleichsgröße und/oder das Abgleichen des tatsächlich vorliegenden Betrags mit der Vergleichsgröße mittels einer mit künstlicher Intelligenz arbeitenden Einheit erfolgt.

12. Haushaltsgerät (1) mit einem elektrischen Antrieb (2), insbesondere Kaffeeautomat mit einem elektromotorisch angetriebenen Mahlwerk, **dadurch gekennzeichnet, dass** eine Steuervorrichtung (5) des Haushaltsgeräts (1) eingerichtet und programmiert ist, das Verfahren nach einem der Ansprüche 1 bis 11 durchzuführen.

13. Haushaltsgerät (1) nach Anspruch 12, mit einer Übertragungseinrichtung (4) zur digitalen Datenübertragung, **dadurch gekennzeichnet, dass** das Beziehen, oder ein Aktualisieren, der Vergleichsgröße des Kennwerts aus der Datenbank mittels der Übertragungseinrichtung (4), insbesondere über eine Internetverbindung, erfolgt, und/oder die mittels der Antriebsstrom-Erfassungseinrichtung 3 erfasste Vergleichsgröße des Kennwerts mittels der Übertragungseinrichtung (4), insbesondere über eine Internetverbindung, in die Datenbank übertragen wird.

14. Computerprogrammprodukt, umfassend Befehle, die bei der Ausführung des Programms durch eine Steuervorrichtung (5) eines Haushaltsgeräts (1), insbesondere eines Kaffeeautomaten, besonders bevorzugt des Haushaltsgeräts (1) bzw. des Kaffeeautomaten gemäß Anspruch 12 oder 13, die Steuervorrichtung (5) veranlassen, die Schritte des Verfahrens gemäß einem der Ansprüche 1 bis 11 durchzuführen.
